# EUROPEAN PATENT SPECIFICATION

(11) **EP 0 636 833 B1**
(45) Date of publication and mention of the grant of the patent: **03.12.1997**
(21) Application number: 94111508.1
(22) Date of filing: 22.07.1994
(51) Int. Cl.: F22B 37/32, B01D 45/12

(54) **Gas-liquid separating apparatus**
Apparat zur Trennung von Gas und Flüssigkeit
Appareil de séparation gaz-liquide

(30) Priority: 23.07.1993 JP 182662/93
(43) Date of publication of application: 01.02.1995
(73) Proprietor: MITSUBISHI JUKOGYO KABUSHIKI KAISHA, Tokyo 100 (JP)
(72) Inventor: Mori, Yasushi c/o Nagasaki Research & Dev. Center, Nagasaki-shi, Nagasaki-ken (JP); Matsuo, Tokuji c/o Nagasaki Research & Dev. Center, Nagasaki-shi, Nagasaki-ken (JP); Hokao, Nobuhiro c/o Nagasaki Res. & Dev. Center, Nagasaki-shi, Nagasaki-ken (JP); Fujimoto, Akihiko c/o Mitsubishi Jukogyo KK, Chiyoda-ku, Tokyo (JP); Sato, Tsuyoshi c/o Nagasaki Research & Dev. Center, Nagasaki-shi, Nagasaki-ken (JP)
(74) Representative: Henkel, Feiler, Hänzel & Partner

(56) References cited:
- DD-A- 97 289
- DE-C- 896 493
- GB-A- 2 126 499

## Description

### BACKGROUND OF THE INVENTION:

### 1. Field of the Invention:

The present invention relates to a gas-liquid separating apparatus as defined in the preamble of claim 1 and 2, applicable to an electric power plant or the like.

### 2. Description of the Prior Art:

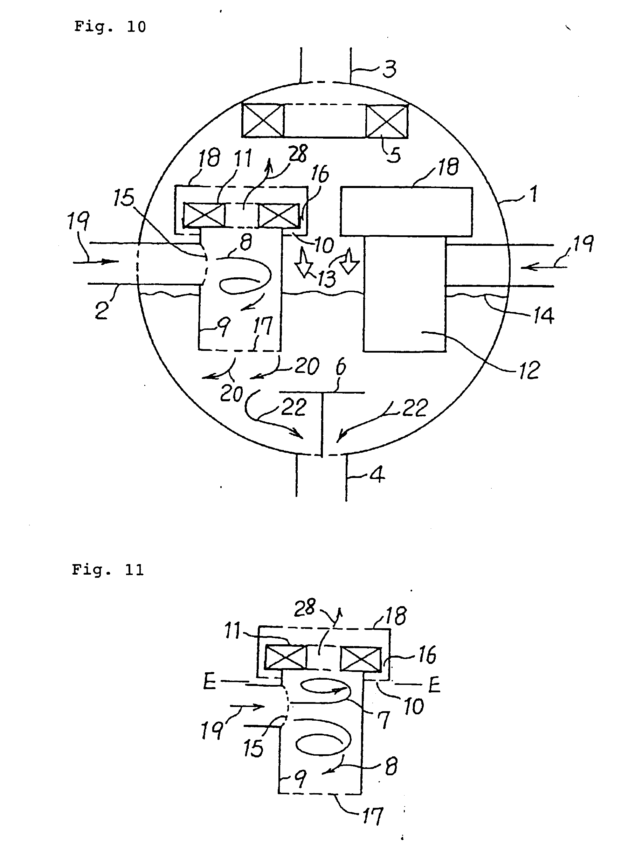

As one example of a gas-liquid separating apparatus in the prior art, a steam drum applicable to an electric power plant is shown in Figs. 10 to 13.

A structure used in this steam drum and shown at 12 in Fig. 10 is called "separator". The separator 12 is equipped within a drum 1 as shown in Fig. 10. In Fig. 10, a right half shows an outer appearance of the separator 12, while a left half shows a vertical cross-section view of the separator 12. Besides, a mist separator 5, a rectifier plate 6 for preventing vortexes, and the like are equipped within the drum 1.

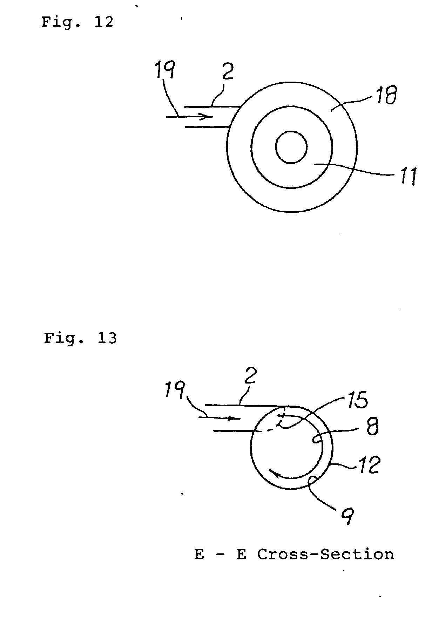

As shown mainly in Figs. 11 and 12, the separator 12 is composed of a cylinder 9, a cap 11 and a secondary separator 11. As this secondary separator 11, a structure consisting of a stack of corrugated plates or a structure of fan blade profile is employed.

Now, description will be made on flows of gas-mixture fluid in a steam drum constructed in the above-described manner. In Fig. 10, gas-liquid mixture fluid 19 fed from a boiler evaporator tube enters a separator inlet 15 through an inlet piping 2. A gas component of this gas-liquid mixture fluid is specifically steam, and a liquid component is unevaporated liquid. The gas-liquid mixture fluid 19 fed through the separator inlet 15 enters from the separator inlet 15 into a cylinder 9 in the tangential direction of the cylinder 9 as shown in Fig. 13, thus becomes a rotating flow 8 along the inner wall surface of the cylinder 9, and thereby centrifugal separation between gas and liquid is effected. The separated steam is discharged from a secondary separator 11 through a cap 18 to a gas-phase section within a drum 1 as a steam flow 28 shown in Fig. 10. Also, the separated liquid flows out from a primary isolated water outlet 17 to a liquid-phase section within the drum 1 as a primary isolated water 20.

It is to be noted that since the centrifugal separation in the cylinder 9 is not sufficient, as shown in Fig. 11, liquid 7 also partly flows into the secondary separator 11, and as shown in Fig. 10 it flows out as secondary isolated water 13 from a cap gap 16 through a cap bottom 10 to a gas-liquid boundary surface 14 within the drum. Likewise, steam is mixed also in the primary isolated water 20 flowing out from the primary isolated water outlet 17 to the liquid-phase section within the drum. The steam in the gas-phase section within the drum 1 is fed from a mist-separator 5 through a steam outlet piping 3 to, for instance, a turbine. The liquid in the liquid-phase section is rectified by a rectifier plate 6 provided for the purpose of prevention of vortexes, and thereafter it is returned to, for instance, an inlet of the boiler evaporator tube through a down comer 4.

In the prior art, the primary isolated water 20 flowing out from the primary isolated water outlet and containing steam, flows out from the primary isolated water outlet 17 to a liquid-phase section within the drum 1 as shown in Fig. 10, while retaining a revolving velocity generated by the rotating flow shown at 8 in Fig. 13. Due to this revolving velocity and the gravity acceleration directed vertically downwards, the primary isolated water 20 flowing out from the primary isolated water outlet 17 forms a flow blowing out from the center axis of the separator to the outside while rotating in the same direction as the rotating flow 8. Owing to this flow, in the liquid-phase section within the drum 1, are stationarily generated strong and fast in-drum liquid flows 22 directed from the primary isolated water outlet 17 towards the down comer 4, hence the primary isolated water 20 flowing out from the primary isolated water outlet 17 is drawn into the in-drum liquid flow 22 in a short period of time, and it flows out in itself through the down comer 4.

Therefore, the above-described gas-liquid separating apparatus in the prior art had a disadvantage that a time available for gas-liquid gravitational separation of the primary isolated water 20 containing steam in the liquid phase section within the drum 1 is not sufficient and hence it was difficult to achieve gas-liquid separation at a high efficiency as aimed at by the subject apparatus.

In addition, while a gas column is formed at a central portion within the cylinder 9 as a result of revolution of a flow, depending upon a flow rate of the gas-liquid mixture fluid 19 sometimes the bottom of the gas column would reach the below of the primary isolated water outlet 17, and a large amount of steam would directly flow out to the liquid-phase section within the drum 1.
Therefore, the above-described gas-liquid separating apparatus in the prior art had also a disadvantage that a range of flow rates where highly efficient gas-liquid separation could be achieved was narrow.

From GB-2 126 499 A a gas-liquid separating apparatus is known having the features of the preamble portions of claim 1 and claim 2. Specifically, this prior art separating apparatus comprises a container with a liquid surface and a separator disposed within the container for separating gas-liquid mixture fluid incoming thereto into isolated liquid and isolated gas with the aid of centrifugal forces. The isolated water portion of the gas-liquid mixture after separation flows down within a shell of the separator in the vertical direction and passes through a perforated plate serving as flow diffuser provided at the bottom of the separator into the water reservoir. Before leaving the cylindrical shell through the flow diffuser, the water flow passes through vertical anti-vortex plates provided radially above the flow diffuser in the shell. This separator thus corresponds essentially to the diffuser of the prior art of Figure 10.

### SUMMARY OF THE INVENTION:

It is the object of the present invention to provide an improved gas-liquid separating apparatus which can achieve gas-liquid separation in a favorable manner.

Another aspect of the present invention is to provide an improved gas-liquid separating apparatus which can practice a highly efficient gas-liquid separating action over a wide range of flow rates.

According to the present invention there is provided a gas-liquid separating apparatus, comprising a container having a liquid surface therein, a separator disposed within the container for separating gas-liquid mixture fluid incoming thereto into isolated liquid and isolated gas with the aid of centrifugal forces, said separator being provided with means for discharging said isolated liquid under said liquid surface and said isolated gas above said liquid surface into said container, characterized in that a perforated plate is equipped in a cylindrical shape at an outlet of an isolated liquid flow of said discharging means of said separator.

According to the present invention there is also provided a gas-liquid separating apparatus, comprising a container having a liquid surface therein and being provided with a downcomer, a separator disposed within the container for separating gas-liquid mixture fluid incoming thereto into isolated liquid and isolated gas with the aid of centrifugal forces, said separator being provided with means for discharging said isolated liquid under said liquid surface and said isolated gas above said liquid surface into said container, and a rectifier means comprising vortex preventing plates and a perforated plate equipped at an outlet of an isolated liquid flow of said discharging means of said separator, characterized in that said perforated plate of said rectifier means has a cylindrical shape and said rectifier means comprises an outflow diverting plate for diverting said discharged isolated liquid in a direction away from the downcomer and through the vortex preventing plates and thereafter through said cylindrical perforated plate.

As the perforated plate used according to the present invention, a perforated plate generally sold in the market such as a punched metal which has holes of several millimeters to several tens millimeters in diameter punched at a constant pitch, can be employed.

If a perforated plate is equipped at an outlet of an isolated liquid flow of the separator according to the present invention, then among the gas-liquid mixture fluid flowing into the separator, a part of the primary isolated water coming from the rotating flow has its outflow velocity decreased by this perforated plate, and thereafter it flows out to the liquid-phase section within the drum. As a result, a flow velocity of the primary isolated water flowing out from the outlet of the primary isolated water to the liquid-phase section within the drum is reduced as compared to the case where the prior art was employed, and a flow velocity in the liquid phase section within the drum also becomes slow. Accordingly, a time allowed for gas-liquid gravitational separation in the liquid-phase section within the drum can be reserved longer than that in the heretofore known apparatus.

Also in the gas-liquid separating apparatus having the construction that rectifier means consisting of an outflow diverting plate, vortex preventing plates and a perforated plate is equipped at an outlet of an isolated liquid flow of the separator according to the present invention, among the gas-liquid mixture fluid flowing into the separator, the primary isolated water coming from the rotating flow has its outflow direction diverted into the direction away from the down comer by the outflow diverting plate after having flowed out from the primary isolated water outlet, subsequently its revolving motion about the center axis of the separator is stopped by the vortex preventing plate, furthermore the outflow velocity to the liquid-phase section within the drum is decelerated by the perforated plate, and simultaneously it becomes primary isolated water flowing out uniformly from the entire perforated plate. In this way, the gas column within the cylinder can be formed stably owing to the appropriate flow resistances generated by equipping the outflow diverting plate, the vortex preventing plates and the perforated plate, and consequently, gas-liquid separation at a high efficiency can be realized over a wide range of flow rates than that in the case of employing the prior art.

The above-mentioned and other objects and advantages of the present invention will become more apparent by reference to the following description of preferred embodiments of the invention taken in conjunction with the accompanying drawings.

### DESCRIPTION OF THE DRAWINGS:

In the accompanying drawings:
Fig. 1 is a vertical cross-section view of a gas-liquid separating apparatus according to a first preferred embodiment of the present invention;
Fig. 2 is a vertical cross-section view of a separator employed in the gas-liquid separating apparatus shown in Fig. 1;
Fig. 3 is a plan view of the separator shown in Fig. 3;
Fig. 4 is a vertical cross-section view of a gas-liquid separating apparatus according to a second preferred embodiment of the present invention;
Fig. 5 is a longitudinal cross-section view of a separator employed in the gas-liquid separating apparatus shown in Fig. 4;
Fig. 6 is a transverse cross-section view of the same separator taken along line A-A in Fig. 5;
Fig. 7 is a transverse cross-section view of the same separator taken along line B-B in Fig. 5;
Fig. 8 is a transverse cross-section view of the same separator taken along line C-C in Fig. 5;
Fig. 9 is a transverse cross-section view of the same separator taken along line D-D in Fig. 5;
Fig. 10 is a vertical cross-section view of a gas-liquid separating apparatus in the prior art;
Fig. 11 is a longitudinal cross-section view of a separator employed in the gas-liquid separating apparatus shown in Fig. 10;
Fig. 12 is a plan view of the separator shown in Fig. 11; and
Fig. 13 is a transverse cross-section view taken along line E-E in Fig. 11.

### DESCRIPTION OF THE PREFERRED EMBODIMENTS:

In the following, the gas-liquid separating apparatus according to the present invention will be described in greater detail on the basis of the illustrated preferred embodiments. In the preferred embodiments described hereunder, component parts equivalent to those contained in the heretofore known apparatus shown in Figs. 10 to 13 are given like reference numerals, and further explanation thereof will be omitted.

### First Preferred Embodiment:

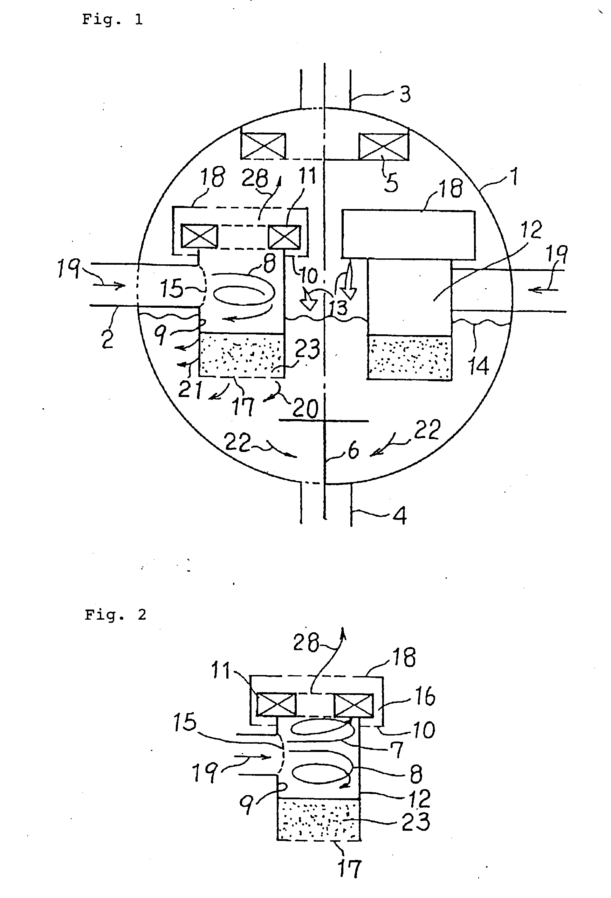

A first preferred embodiment is shown in Figs. 1 to 3. As shown in these figures, in the gas-liquid separating apparatus according to this preferred embodiment, a perforated plate 23 is used at an outlet of an isolated liquid flow of a separator 12. What is called "perforated plate" here could be a perforated plate (punched metal) sold in the market, and for instance, it could be a sheet steel of several millimeters in thickness punched with holes of several millimeters to several tens millimeters in diameter at a constant pitch. The perforated plate 23 is formed by working this sheet steel into a cylindrical shape and it is mounted to a separator main body.

Since the apparatus according to this preferred embodiment has the above-described construction, among gas-liquid mixture fluid 19 flowing into the separator 12, a part of primary isolated water coming from a rotating flow 8 would flow out to a liquid-phase section within a drum 1 after having its outflow velocity decelerated by the perforated plate 23. As a result, a flow velocity of the primary isolated water 20 flowing out through a primary isolated water outlet 17 to the liquid-phase section within the drum is decreased as compared to the case where the prior art is employed.

The primary isolated water 21 flowing out through the perforated plate 23 to the liquid-phase section within the drum 1 forms an upward flow in the vicinity of the cylinder 9 as influenced by a buoyancy acting upon a steam component because of a slow outflow velocity. Accordingly, a time available for gas-liquid gravitational separation in the liquid-phase section with the drum 1 can be reserved longer than that in the case of employing the prior art.

In addition, since the flow velocity of the primary isolated water 20 flowing out through the primary isolated water outlet 17 to the liquid phase section within the drum 1 can be made smaller than that in the case of employing the prior art owing to the improvement according to the present invention, the amount of the primary isolated water 20 drawn into the flow 22 within the drum can be made smaller than that in the case of employing the prior art, and therefore, the above-described disadvantage of the heretofore known apparatus can be mitigated.

### Second Preferred Embodiment:

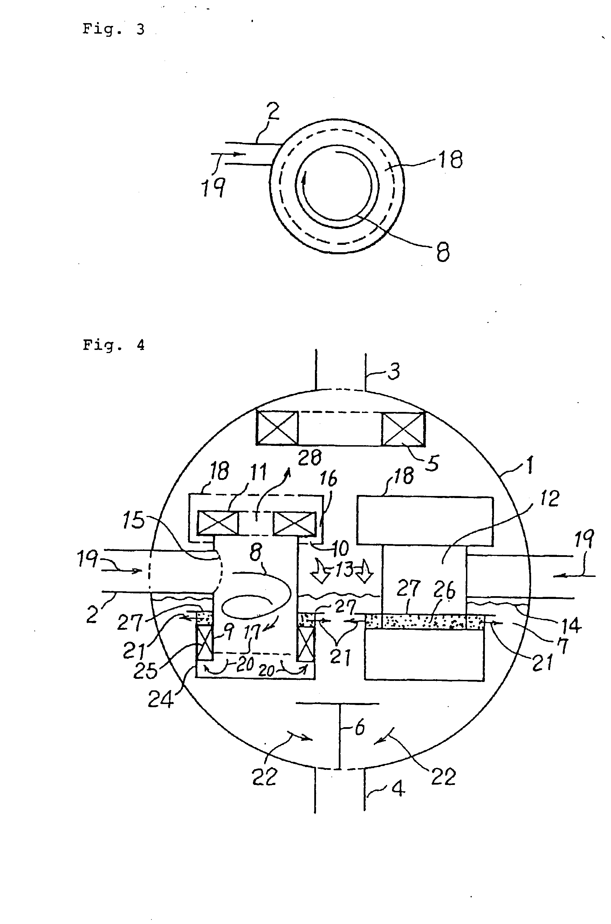

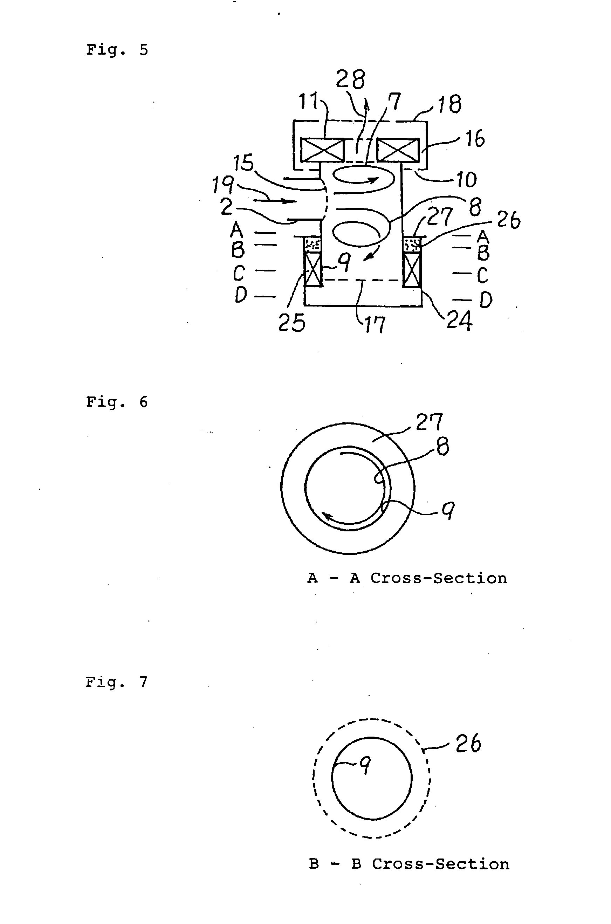

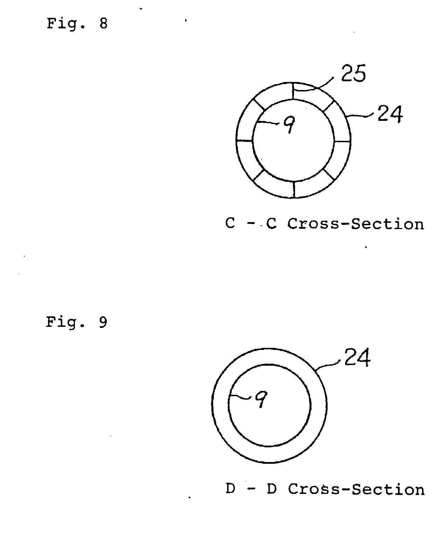

Next, description will be made on a second preferred embodiment shown in Figs. 4 to 9. In this gas-liquid separating apparatus, at an outlet 17 of primary isolated water is equipped a rectifier mechanism consisting of an outflow diverting plate 24, vortex preventing plates 25 and a perforated plate 26. In this preferred embodiment, as best seen in Fig. 5, an outflow diverting plate 24 surrounding a cylinder 9 is equipped. The outflow diverting plate 24 consists of a disc-shaped bottom plate and a cylindrical side plate. In addition, between an inner surface of this outflow diverting plate 24 and an outer surface of the cylinder 9 are equipped eight vortex preventing plates 25 radially at an equal angular interval as shown in Fig. 8, furthermore a cylindrical perforated plate 26 is equipped above the top edge of the side plate of the outflow diverting plate 24 as shown in Figs. 5 and 7, and the top of the annular space between this perforated plate 26 and the cylinder 9 is blocked by a top plate 27 as shown in Figs. 5 and 6.

Among the gas-liquid mixture fluid 19 flowing into the separator 12, primary isolated water coming from a rotating flow 8 flows out through a primary isolated water outlet 17, thereafter its outflow direction is diverted in the direction away from a down comer 4 as a primary isolated water flow 20 by the outflow diverting plate 24, subsequently revolving motion about the center axis of the separator 12 as is the case with the primary isolated water coming from the rotating flow 8 in Fig. 3 is stopped by the vortex preventing plates 25, and further, simultaneously with deceleration of the outflow velocity to the liquid-phase section within the drum 1 caused by the perforated plate 26, it becomes a primary isolated water flow 21 flowing out uniformly from the entire perforated plate.

The primary isolated water 21 flowing out through the perforated plate 26 to the liquid-phase section within the drum 1 becomes an upward flow in the vicinity of the separator 12 as influenced by a buoyancy acting upon a steam component in the primary isolated water 21 because of a slow outflow velocity. Furthermore, since this flow has a slow outflow velocity and a strength of the flow is weak, it cannot become a generation source of a steady flow in the liquid-phase section within the drum 1 as is the case with employment of the prior art.

Consequently, the strong and fast in-drum liquid flow 22 directed from the primary isolated water outlet 17 towards the down comer 4 as is the case with the heretofore known apparatus shown in Fig. 10, also would not be generated. Accordingly, the primary isolated water 21 having flowed out through the perforated plate 26 would initially stagnate in the vicinity of the gas-liquid boundary surface 14, thereafter it is drawn into the in-drum liquid flow 22, and it flows out to the down comer 4. Thereby, a time available for gas-liquid gravitational separation of the primary isolated water 21 in the liquid-phase section within the drum can be reserved longer than that in the case of employing the prior art, and so, the above-described disadvantage can be eliminated.

In addition, since a gas pillar within the cylinder 9 can be stably formed owing to an appropriate flow resistance generated by the equipment of the outflow diverting plate 24, the vortex preventing plates 25 and the perforated plate 26, highly efficient gas-liquid separation can be realized in a broader range of flow rates than in the case of employing the prior art.

As will be obvious from the detailed description of the preferred embodiments above, in the gas-liquid separating apparatus according to the present invention, owing to the simple construction that a perforated plate is equipped at an outlet of an isolated liquid flow of a separator, gas-liquid separation can be effected more favorably than the apparatus in the prior art.

In addition, as a result of employing the construction that rectifier means consisting of an outflow diverting plate, vortex preventing plates and a perforated plate is equipped at an outlet of an isolated liquid flow of a separator according to the present invention, gas-liquid separation within a drum can be effected more favorably than the case of employing the prior art, and simultaneously, highly efficient gas-liquid separation can be realized in a broader range of flow rates than that in the case of employing the prior art.

## Claims

1. A gas-liquid separating apparatus, comprising:
a container (1) having a liquid surface (14) therein;
a separator (12) disposed within the container (1) for separating gas-liquid mixture fluid (19) incoming thereto into isolated liquid (20, 21) and isolated gas (28) with the aid of centrifugal forces, said separator (12) being provided with means for discharging said isolated liquid (20, 21) under said liquid surface (14) and said isolated gas (28) above said liquid surface (14) into said container (1);
characterized in that a perforated plate (23) is formed in a cylindrical shape at an outlet (17) of an isolated liquid flow of said discharging means of said separator (12).

2. A gas-liquid separating apparatus, comprising:
a container (1) having a liquid surface (14) therein and being provided with a downcomer (4);
a separator (12) disposed within the container (1) for separating gas-liquid mixture fluid (19) incoming thereto into isolated liquid (20, 21) and isolated gas (28) with the aid of centrifugal forces, said separator (12) being provided with means for discharging said isolated liquid (20, 21) under said liquid surface (14) and said isolated gas (28) above said liquid surface (14) into said container (1); and
a rectifier means comprising vortex preventing plates (25) and a perforated plate (26) equipped at an outlet (17) of an isolated liquid flow of said discharging means of said separator (12);
characterized in that said perforated plate (26) of said rectifier means has a cylindrical shape and
said rectifier means comprises an outflow diverting plate (24) for diverting said discharged isolated liquid in a direction away from the downcomer (4) and through the vortex preventing plates (25) and thereafter through said cylindrical perforated plate (26).

3. A gas-liquid separating apparatus as claimed in claim 1 or 2, characterized in that a punched metal having holes of several mm to several tens mm in diameter punched at a constant pitch is employed as said perforated plate (23; 26).

## Patentansprüche

1. Gas/Flüssigkeit-Trennapparat, umfassend:
einen Behälter (1) mit einer Flüssigkeitsoberfläche (14) darin,
einen im Behälter (1) angeordneten Scheider (12) zum Auftrennen des in ihn eintretenden Gas/Flüssigkeit-Fluid-gemisches (19) in getrennte Flüssigkeit (20, 21) und getrenntes Gas (28) mit Hilfe von Zentrifugalkräften, wobei der Scheider (12) mit Mitteln zum Austragen der getrennten Flüssigkeit (20, 21) unter der Flüssigkeitsoberfläche (14) und des getrennten Gases (28) über der Flüssigkeitsoberfläche (14) in den Behälter (1) versehen ist,
dadurch gekennzeichnet, daß eine perforierte Platte (23) in bzw. mit einer zylindrischen Form an einem Auslaß (17) eines getrennten Flüssigkeitsstroms von den Austragmitteln des Scheiders (12) geformt ist.

2. Gas/Flüssigkeit-Trennapparat, umfassend:
einen Behälter (1), der eine Flüssigkeitsoberfläche (14) darin aufweist und mit einem Abzugsrohr (4) versehen ist,
einen im Behälter (1) angeordneten Scheider (12) zum Auftrennen des in ihn eintretenden Gas/Flüssigkeit-Fluidgemisches (19) in getrennte Flüssigkeit (20, 21) und getrenntes Gas (28) mit Hilfe von Zentrifugalkräften, wobei der Scheider (12) mit Mitteln zum Austragen der getrennten Flüssigkeit (20, 21) unter der Flüssigkeitsoberfläche (14) und des getrennten Gases (28) über der Flüssigkeitsoberfläche (14) in den Behälter (1) versehen ist, und
eine Rektifiziereinheit mit Wirbelverhinderungs- oder -schutzplatten (25) und einer perforierten Platte (26), die an einem Auslaß (17) eines getrennten Flüssigkeitsstroms von den Austragmitteln des Scheiders (12) angeordnet ist,
dadurch gekennzeichnet, daß die perforierte Platte (26) der Rektifiziereinheit eine zylindrische Form aufweist und
die Rektifiziereinheit eine Ausströmablenkplatte (24) zum Ablenken der ausgetragenen getrennten Flüssigkeit in einer Richtung vom Abzugsrohr (4) hinweg und durch die Wirbelschutzplatten (25) und danach durch die zylindrische perforierte Platte (26) umfaßt.

3. Gas/Flüssigkeit-Trennapparat nach Anspruch 1 oder 2, dadurch gekennzeichnet, daß als perforierte Platte (23; 26) ein gestanztes Metall verwendet wird, in welchem Löcher eines Durchmessers von einigen Millimetern bis zu einem Mehrfachen von 10 mm mit einem konstanten Mittenabstand ausgestanzt sind.

## Revendications

1. Un appareil de séparation gaz-liquide, comportant :
un récipient (1) présentant une surface de liquide (14) à l'intérieur ;
un séparateur (12) disposé à l'intérieur du récipient (1) pour séparer le fluide (19) de mélange gaz-liquide pénétrant dans celui-ci en du liquide isolé (20, 21) et du gaz isolé (28) à l'aide de forces centrifuges, ledit séparateur (12) étant muni de moyens pour délivrer ledit liquide isolé (20, 21) au-dessous de ladite surface de liquide (14) et ledit gaz isolé (28) au-dessus de ladite surface de liquide (14) à l'intérieur dudit récipient (1) ;
caractérisé en ce que la plaque perforée (23) est formée sous une forme cylindrique à une sortie (17) d'un courant liquide isolé desdits moyens de décharge dudit séparateur (12).

2. Un appareil de séparation gaz-liquide, comportant :
un récipient (1) présentant une surface de liquide (14) à l'intérieur et muni d'un tube de retour (4) ;
un séparateur (12) disposé à l'intérieur du récipient (1) pour séparer le fluide de mélange gaz-liquide (19) pénétrant dans celui-ci en du liquide isolé (20, 21) et du gaz isolé (28) à l'aide de forces centrifuges, ledit séparateur (12) étant muni de moyens pour délivrer ledit liquide isolé (20, 21) au-dessous de ladite surface de liquide (14) et ledit gaz isolé (28) au-dessus de ladite surface de liquide (14) à l'intérieur dudit récipient (1) ; et
des moyens redresseurs comprenant des plaques (25) de prévention de tourbillon et une plaque perforée (26) montée à une sortie (17) d'un courant liquide isolé desdits moyens de décharge dudit séparateur (12)
caractérisé en ce que ladite plaque perforée (26) desdits moyens redresseurs présente une forme cylindrique, et
lesdits moyens redresseurs comportent une plaque (24) de déviation de courant sortant pour dévier ledit liquide isolé délivré dans une direction allant en s'éloignant du tube de retour (4) et à travers les plaques (25) de prévention de tourbillon, et ensuite à travers ladite plaque perforée (26).

3. Un appareil de séparation gaz-liquide tel que revendiqué dans la revendication 1 ou 2, caractérisé en ce qu'un métal embouti comportant des orifices de plusieurs mm à plusieurs dizaines de mm de diamètre emboutis suivant un pas constant est utilisé en tant que ladite plaque perforée (23, 26).
